# EUROPÄISCHE PATENTSCHRIFT

(11) **EP 0 410 118 B1**
(45) Veröffentlichungstag und Bekanntmachung des Hinweises auf die Patenterteilung: **27.04.1994**
(21) Anmeldenummer: 90110860.5
(22) Anmeldetag: 08.06.1990
(51) Int. Cl.: F02C 3/36, F02C 3/20

(54) **Kombinierter Gas/Dampfturbinen-Prozess**
Combined cycle process
Cycle combiné de turbine à gaz et à vapeur

(30) Priorität: 26.07.1989 DE 3924615
(43) Veröffentlichungstag der Anmeldung: 30.01.1991
(73) Patentinhaber: DEUTSCHE BABCOCK ENERGIE- UND UMWELTTECHNIK AKTIENGESELLSCHAFT, 46049 Oberhausen (DE)
(72) Erfinder: Rehwinkel, Heiko, Dr., D-4250 Bottrop (DE); Möllenhoff, Horst, Dr., D-4330 Mülheim/Ruhr (DE); Meier, Hans-Joachim, D-4234 Alpen-Menzelen (DE)
(74) Vertreter: Müller, Jürgen, Dipl.-Ing.

(56) Entgegenhaltungen:
- EP-A- 0 086 261
- DE-A- 2 546 469
- DE-A- 2 920 069
- DE-A- 3 617 364
- DE-A- 3 729 910
- GB-A- 704 107
- GB-A- 2 044 360
- GB-A- 2 133 839
- US-A- 4 164 846

## Beschreibung

Die Erfindung betrifft einen kombinierten Gas/Dampfturbinen-Prozeß mt den Merkmalen des Oberbegriffes des Ansprüches 1 sowie ein nach diesem Prozeß arbeitendes Kraftwerk.

Bei einer bekannten kombinierten Gas/Dampfturbinen-Anlage (DE-OS 32 04 672) tritt das in der als Wirbelschichtfeuerung ausgebildeten Druckfeuerung erzeugte Rauchgas mit Wirbelbettemperatur in die Gasturbinenbrennkammer ein. In dieser Brennkammer wird die Gastemperatur durch Verbrennen von in dem Vergasungsreaktor erzeugtem Brenngas angehoben. Die dem Vergasungsreaktor und der Gasturbine zugeführte Verbrennungsluft wird in Heizflächen vorgewärmt, die in der Wirbelschicht der Druckfeuerung angeordnet sind. Des weiteren sind in der Wirbelschicht und dem Vergasungsreaktor Heizflächen angeordnet, die an einen Wasser-Dampf-Kreislauf angeschlossen sind. Damit wird ein Teil der freigesetzten Wärme dem Dampfturbinenteilprozeß zugeführt, der einen geringeren Wirkungsgrad aufweist als der kombinierte Prozeß aus Gasturbine mit nachgeschaltetem Dampfturbinenprozeß.

Bei dem reinen Gas/Dampfturbinen-Prozeß wird die gesamte Brennstoffwärme in der Gasturbinenbrennkammer entbunden. Der Luftüberschuß wird so gewählt, daß die zulässige Gasturbineneintrittstemperatur erreicht wird. Nur die Abwärme nach der Gasturbine wird in einem Abhitzekessel an das Wasser-Dampf-System übertragen. Hierdurch erreicht die Gasturbine 50 und mehr Prozent Leistungsanteil an der Gesamtleistung des Blockes. Die heute angewendeten Gaseintrittstemperaturen der Gasturbine von über 1100 Grad C lassen sich bisher nur mit Erdgas- oder ölfeuerungen erreichen.

Weiterhin sind kombinierte Gas/Dampfturbinen-Anlagen bekannt (VGB Kraftwerkstechnik 59 (1979), Seiten 634 bis 640; VDI Berichte Nr. 715, 1989, Seiten 183 - 184.), bei denen in der Wirbelschichtfeuerung ausschließlich luftgekühlte Tauchheizflächen angeordnet sind, auf die die Verbrennungswärme übertragen wird. Das Rauchgas und die erwärmte Luft werden dabei mit einer Temperatur, die etwas über der Verbrennungstemperatur von etwa 850 Grad C liegt, der Gasturbine zugeführt. Wegen dieser begrenzten Gastemperatur vor der Gasturbine wird dieser luftgekühlte Kreislauf gegenüber einem Wasser-Dampf-Kreislauf als unwirtschaftlich angesehen.

Der Erfindung liegt die Aufgabe zugrunde, einen kombinierten Gas/Dampfturbinen-Prozeß zu schaffen, der Kohle als Brennstoff verwendet und bei dem die entbundene Verbrennungswärme soweit wie möglich dem Gasturbinenprozeß zugeführt wird.

Diese Aufgabe wird bei einem gattungsgemäßen Gas/Dampfturbinen-Prozeß erfindungsgemäß durch die kennzeichnenden Merkmale des Anspruches 1 gelöst. Ein nach diesem Prozeß arbeitendes Kraftwerk ist in dem Anspruch 13 angegeben. Vorteilhafte Ausgestaltungen der Erfindung sind in den Unteransprüchen wiedergegeben.

Dadurch daß unter Verwendung von Kohle als Brennstoff die Gasturbineneintrittstemperatur auf einen hohen Wert eingestellt wird und daß die vor der Gasturbine anfallende Verbrennungswärme auf das Rauchgas und im Wärmetausch mit dem aus dem Rauchgas abgetrennten Feststoff auf die Luft übertragen wird, kommt die Verbrennungswärme dem Gasturbinenprozeß zugute. Der Wasser-Dampf-Kreislauf ist auf das der Gasturbine nachgeschaltete Abhitzesystem und die technisch notwendige Kühlung von Aggregaten und Strukturen z. B. der Tragkonstruktion und der Begrenzungswände der Druckfeuerung und der Druckvergasung beschränkt. Der Leistungsanteil der Gasturbine an der Gesamtleistung des Kraftwerksblockes steigt damit auf Kosten des Dampfprozesses an, wodurch sich der thermische Gesamtwirkungsgrad erhöht.

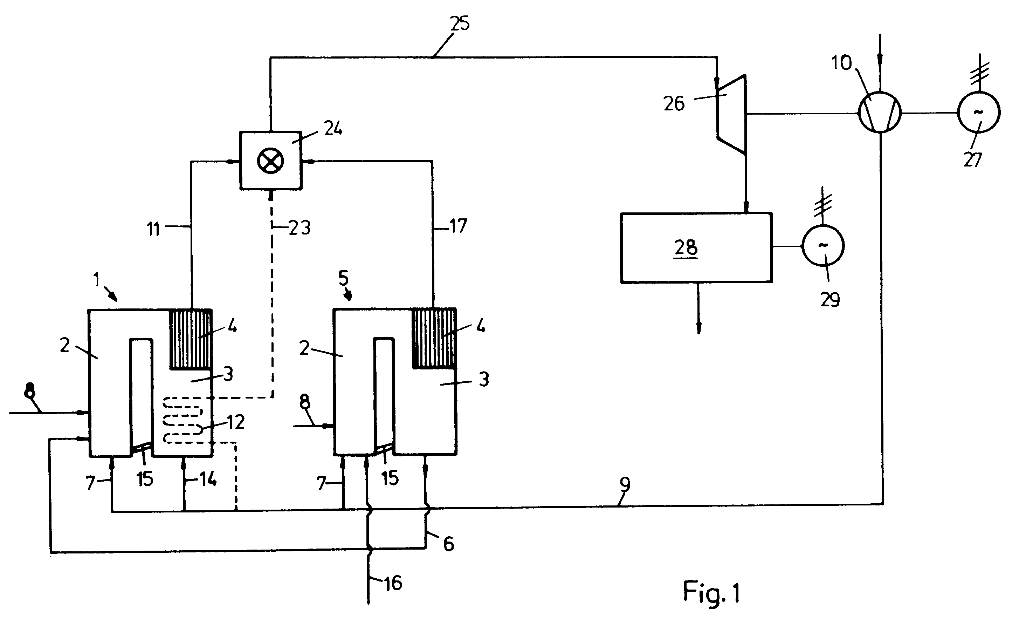

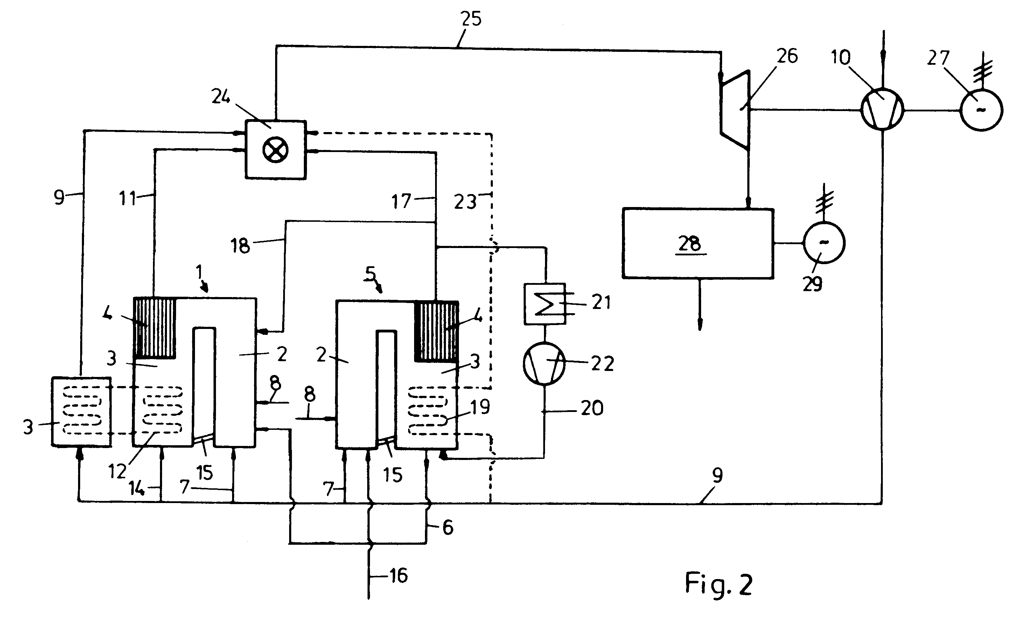

Zwei Ausführungsbeispiele der Erfindung sind in der Zeichnung dargestellt und werden im folgenden näher erläutert. Die Figuren 1 und 2 zeigen jeweils ein Schaltschema für einen kombinierten Gas/Dampfturbinen-Prozeß.

Das kombinierte Gas/Dampfturbinen-Kraftwerk umfaßt eine Druckfeuerung, die als Staubfeuerung mit Feststoffrückführung oder vorzugsweise als Druckwirbelschichtfeuerung ausgebildet ist. Die Druckfeuerung 1 ist mit Rohrwänden versehen, die aus gasdicht miteinander verschweißten und von Wasser oder Dampf durchströmten Rohren bestehen. Die Druckfeuerung 1 kann auch von innen isolierten und keramisch ausgekleideten Wänden begrenzt sein. Die Druckfeuerung 1 enthält zwei Züge 2, 3 mit einer die Wirbelschicht aufnehmenden Reaktionszone im ersten Zug 2, mit einer sich daran anschließenden Nachbrennzone, mit einem Abscheider 4 und mit einer Kühlzone für den abgetrennten Feststoff, der sich als Feststoffschicht in dem zweiten Zug 3 sammelt.

Der Druckfeuerung 1 ist eine Druckvergasung 5 parallel geschaltet. Die Druckvergasung 5 und die Druckfeuerung 1 sind vorzugsweise aus gleichartigen Elementen aufgebaut. Die Druckvergasung 5 enthält einen ersten Zug 2 mit einer Wirbelschicht, einen filtrierenden Abscheider 4 und einen zweiten Zug 3, in den der feststoffseitige Austrag des Abscheiders 4 mündet und in dem sich der abgetrennte feste Vergasungsrückstand (Koks) sammelt.

An den zweiten Zug 3 der Druckvergasung 5 ist eine Koksleitung 6 angeschlossen, die mit dem ersten Zug 2 der Druckfeuerung 1 verbunden ist und in deren Reaktionszone einmündet. Der Reaktionszone der Druckfeuerung 1 werden Verbrennungsluft über eine Luftzuführungsleitung 7 und gegebenenfalls frischer Brennstoff über eine Brennstoffleitung 8 zugeführt. Als Brennstoff dient fester fossiler Brennstoff wie trockene oder nasse Stein- oder Braunkohle, die mechanisch, pneumatisch oder als Flüssigkeit-Kohle-Suspension eingetragen wird.

Die Luftzuführungsleitung 7 ist an eine Luftleitung 9 angeschlossen, die über einen Verdichter 10 mit Druckluft versorgt wird. Die Luftzahl der Druckfeuerung ist auf etwa 1,3 eingestellt. Die Rauchgase treten nach dem Verlassen der Nachbrennzone mit einer Temperatur von 800 bis 1000 Grad C in den Abscheider 4 ein.

Der Abscheider 4 ist als filtrierender Heißgasabscheider ausgebildet und kann keramische Filterkerzen enthalten. Der gasseitige Austrag des Abscheiders 4 ist mit einer Rauchgasleitung 11 verbunden, während der feststoffseitige Austrag in den zweiten Zug 3 mündet. Der in dem Abscheider 4 abgetrennte Feststoff sammelt sich in dem zweiten Zug 3 an und bildet dort eine Feststoffschicht.

In der Feststoffschicht des zweiten Zuges 3 sind Heizflächen 12 angeordnet, die gemäß Fig. 1 von Luft aus der Luftleitung 9 durchströmt sind. Wie in Fig. 2 gezeigt ist, können die Heizflächen 12 auch von einem gasförmigen oder flüssigen Wärmeträgermedium durchströmt sein, das in einem getrennten Wärmetauscher 13 seine Wärme indirekt an die Luft aus der Luftleitung 9 abgibt. Durch den Wärmetausch mit dem Feststoff wird der Luftstrom auf bis zu 850 Grad C erwärmt.

Der zweite Zug 3 ist über eine weitere Luftzuführungsleitung 14 mit der Luftleitung 9 verbunden, über die Luft in die Feststoffschicht eingebracht wird und diese durchströmt. Die die Feststoffschicht durchströmende Luft wird in dem Abscheider 4 von mitgerissenen Feststoffen befreit und zusammen mt dem Rauchgas über die Rauchgasleitung 11 abgeführt. Der sich im Wärmetausch mit der Luft abkühlende Feststoff wird über eine Feststoffrückführleitung 15 in die Wirbelschicht des ersten Zuges 2 zurückgeführt.

In der Druckvergasung 5 wird fester oder flüssiger Brennstoff unter Druck entgast oder teilvergast. Als Brennstoff kommen beispielsweise Steinkohl oder grubennasse Braunkohle zum Einsatz, die gegebenenfalls unter Zusatz von Wasser in Form einer dickflüssigen Brennstoff-Wasser-Suspension über die Brennstoffleitung 8 eingespeist wird. Je nach Ausgangsfeuchte des Rohbrennstoffes ist auch ein Trockeneintrag vorteilhaft.

Um in dem Rauchgas und dem Brenngas einen geringeren Gehalt an Schwefeloxiden einzustellen, wird ein schwefelbindendes Additiv z.B. Kalk oder Kalkstein vorteilhafterweise zusammen mit dem Brennstoff in die Druckfeuerung 1 oder die Druckvergasung 5 eingespeist. Die sich durch Reaktion von Additiv und Schwefel in der Druckvergasung 5 bildenden Sulfide und Sulfite gelangen mit dem Koks in die Druckfeuerung 1, wo sie zu Sulfaten oxidiert werden.

Der Vergasungsreaktor 5 wird weiterhin mit unter Druck stehender Luft über die Luftzuführungsleitung 7 und mit einem Vergasungsmittel, z.B. Wasser oder Dampf über eine Vergasungsmittelleitung 16 versorgt. Das durch die Entgasung oder Teilvergasung gewonnene Brenngas wird mit einer Temperatur von etwa 850 Grad C nach dem Durchtritt durch den filtrierenden Abscheider 4 über eine Brenngasleitung 17 abgeführt. Zur Verminderung des in der Druckfeuerung 1 gebildeten Stickoxides kann es vorteilhaft sein, einen Teilstrom des CO-haltigen Brenngases aus der Brenngasleitung 17 über eine Leitung 18 in den ersten Zug 2 der Druckfeuerung 1 einzublasen.

Der sich in dem zweiten Zug 3 der Druckvergasung 5 ansammelnde Koks kann über die Feststoffrückführleitung 15 in den ersten Zug 2 zurückgeführt oder über die Koksleitung 6 der Druckfeuerung 1 zugeführt werden. Um den Koks über die Koksleitung 6 einfach fördern zu können, kann der Koks gekühlt werden, was in dem zweiten Zug 3 der Druckvergasung 5 geschehen kann. Zu diesem Zweck sind in dem zweiten Zug 3 der Druckvergasung 5 Heizflächen 19 angeordnet, die ebenso wie die Heizflächen 12 der Druckfeuerung 1 an die Luftleitung 9 angeschlossen und von Luft durchströmt sind. Weiterhin kann eine Rezirkulationsleitung 20 von der Brenngasleitung 17 abgezweigt und durch den Boden des zweiten Zuges 3 der Druckvergasung 5 geführt sein. In der Rezirkulationsleitung 20 sind ein Kühler 21 und ein Rezirkulationsgebläse 22 angeordnet. Der Koks wird auf die Weise indirekt durch Luft und/oder direkt durch gekühltes rückgeführtes Brenngas gekühlt.

Die Rauchgasleitung 11 der Druckfeuerung 1, die Brenngasleitung 17 der Druckvergasung 5 und die die indirekt erwärmte Luft führende Heißluftleitung 23 bzw. die den Wärmetauscher 13 aufnehmende Luftleitung 9 sind zu einer Misch- und Brennkammer 24 geführt. In dieser Misch- und Brennkammer 24 werden die heißen Gasströme vereinigt und die Temperatur des Gasgemisches durch Verbrennung erhöht. Das Gasgemisch wird über eine Gasleitung 25 einer Gasturbine 26 zugeführt und dort entspannt. Die Gasturbine 26 treibt den Verdichter 10 und einen Generator 27 an. Die Menge der der Druckfeuerung 1 zugeführten Luft und die Menge der indirekt erwärmten Luft sind so aufeinander abgestimmt, daß in dem Gesamtsystem in dem Rauchgas hinter der Gasturbine 26 die Luftzahl größer als 1,5 ist.

Zur Leistungsregelung der Gasturbine 26 wird das Verhältnis der Brennstoffzufuhr in die Druckfeuerung 1 zur Brennstoffzufuhr in die Druckvergasung 5 geändert. Dabei wird bei einer Lastverminderung die Brennstoffzufuhr in die Druckvergasung 5 zugunsten eines Brennstoffeintrages in die Druckfeuerung 1 verringert. Bei Teillasten der Gasturbine 26 mit verminderten Gasturbineneintrittstemperaturen kann die Druckfeuerung 1 oder alternativ die Druckvergasung 5 abgeschaltet werden. In diesem Fall wird die Gesamtanlage mit einem der beiden genannten Aggregate alleine betrieben. Der bei alleinigem Betrieb der Druckvergasung 5 anfallende Koks muß gegebenenfalls zwischengelagert werden.

Der Gasturbine 26 ist gasseitig ein Abhitzesystem 28 nachgeschaltet, das einen Wasser-Dampf-Kreislauf mit einer Dampfturbine umfaßt, die einen Generator 29 antreibt. Die Turbinenabgase können anschließend noch dazu verwendet werden, den der Druckfeuerung zugeführten Brennstoff vorzutrocknen.

## Patentansprüche

1. Kombinierter Gas/Dampfturbinen-Prozeß, bei dem einer Gasturbine ein Abhitzesystem mit einem Wasser-Dampf-Kreislauf nachgeschaltet und eine Druckfeuerung sowie eine Brennkammer vorgeschaltet sind, wobei in der Druckfeuerung Heizflächen zur Erwärmung von Luft angeordnet sind, wobei der Druckfeuerung eine Druckvergasung parallel geschaltet ist und wobei der Brennkammer Rauchgas aus der Druckfeuerung, vorgewärmte Verbrennungsluft und Brenngas aus der Druckvergasung zugeführt werden, dadurch gekennzeichnet,daß das in der Druckfeuerung erzeugte Rauchgas in einem filtrierenden Abscheider von Feststoff gereinigt wird daß der Feststoff in einem zweiten Zug der Druckfeuerung gesammelt wird daß die der Brennkammer zugeführte Verbrennungsluft durch einen Wärmetausch mit dem abgetrennten Feststoff erwärmt wird und daß die in der Druckfeuerung freigesetzte Verbrennungswärme bis auf technisch bedingte Kühlverluste ausschließlich auf das Rauchgas und die der Brennkammer zugeführte Verbrennungsluft übertragen wird.

2. Gas/Dampfturbinen-Prozeß nach Anspruch 1, dadurch gekennzeichnet, daß Verbrennungsluft in einem indirekten Wärmetausch mit dem Feststoff erwärmt wird.

3. Gas/Dampfturbinen-Prozeß nach Anspruch 1, dadurch gekennzeichnet, daß Verbrennungsluft im Wärmetausch mit dem Feststoff und einem Wärmeträgermedium erwärmt wird.

4. Gas/Dampfturbinen-Prozeß nach einem der Ansprüche 1 bis 3, dadurch gekennzeichnet, daß Verbrennungsluft durch den Feststoff geblasen und über den Abscheider zusammen mit dem Rauchgas abgeführt wird.

5. Gas/Dampfturbinen-Prozeß nach einem der Ansprüche 1 bis 4, dadurch gekennzeichnet, daß zur Leistungsregelung der Gasturbine das Verhältnis der Brennstoffzufuhr in die Druckvergasung zur Brennstoffzufuhr in die Druckfeuerung verändert wird.

6. Gas/Dampfturbinen-Prozeß nach einem der Ansprüche 1 bis 4, dadurch gekennzeichnet, daß bei Teillast der Gasturbine die Druckfeuerung oder die Druckvergasung abgeschaltet wird.

7. Gas/Dampfturbinen-Prozeß nach einem der Ansprüche 1 bis 6, dadurch gekennzeichnet, daß Brenngas aus der Druckvergasung in die Druckfeuerung zur Reduktion des dort gebildeten Stickoxides geführt wird.

8. Gas/Dampfturbinen-Prozeß nach einem der Ansprüche 1 bis 7, dadurch gekennzeichnet, daß Braunkohle grubennaß gegebenenfalls mit Zusatzwasser in die Druckvergasung eingetragen wird.

9. Gas/Dampfturbinen-Prozeß nach einem der Ansprüche 1 bis 6, dadurch gekennzeichnet, daß der Brennstoff durch das Gasturbinenabgas getrocknet wird.

10. Gas/Dampfturbinen-Prozeß nach einem der Ansprüche 1 bis 9, dadurch gekennzeichnet, daß in die Druckfeuerung und die Druckvergasung ein schwefelbindendes Additiv eingegeben wird.

11. Gas/Dampfturbinen-Prozeß nach Anspruch 10, dadurch gekennzeichnet, daß die in der Druckvergasung gebildeten Schwefelverbindungen in die Druckfeuerung eingegeben und dort oxidiert werden.

12. Gas/Dampfturbinen-Prozeß nach einem der Ansprüche 1 bis 11, dadurch gekennzeichnet, daß bei der Verbrennung von festen Brennstoffen die Luftzahl für den Gesamtprozeß in dem Rauchgas hinter der Gasturbine auf größer als 1,5 eingestellt wird.

13. Kraftwerk unter Verwendung eines kombinierten Gas/Dampfturbinen-Prozesses nach den Ansprüchen 1 bis 12, dadurch gekennzeichnet, daß die Druckfeuerung (1) einen ersten, eine Wirbelschicht aufnehmenden Zug (2), einen Abscheider (4) zum Abtrennen von Feststoff aus dem Rauchgas und einen zweiten, den abgetrennten Feststoff aufnehmenden Zug (3) enthält, der als Feststoffkühler ausgebildet ist und daß die Feststoffschicht von einem Teilstrom der der Brennkammer (24) zugeführten Verbrennungsluft durchströmt ist und daß in der Feststoffschicht Heizflächen (12) angeordnet sind, die mit Verbrennungsluft in einem Wärmetausch stehen.

14. Kraftwerk nach Anspruch 13, gekennzeichnet durch einen von einem Wärmeträgermedium durchflossenen Wärmetauscher (13), dessen Heizflächen einerseits in der Feststoffschicht des zweiten Zuges (3) der Druckfeuerung (1) und andererseits in einer die Verbrennungsluft führenden Luftleitung (9) angeordnet sind.

15. Kraftwerk nach Anspruch 13, dadurch gekennzeichnet, daß die Druckfeuerung (1) und die Druckvergasung (5) aus gleichartigen Elementen aufgebaut sind.

## Claims

1. Combined gas and steam turbine process, in which a waste heat system with a water-steam circuit is connected downstream of a gas turbine and a pressurised furnace as well as a combustion chamber are connected upstream of the gas turbine, wherein heating surfaces for the heating of air are arranged in the pressurised furnace, wherein a pressure gasification is connected in parallel with the pressurised furnace and wherein flue gas from the pressurised furnace and preheated combustion air and fuel gas from the pressure gasification are fed to the combustion chamber, characterised thereby, that the flue gas produced in the pressurised furnace is purified of solid substance in a filtering separator, that the solid substance is collected in a second flue duct of the pressurised furnace, that the combustion air fed to the combustion chamber is heated by a heat exchange with the separated solid substance and that the combustion heat liberated in the pressurised furnace is transferred, apart from technically caused cooling losses, exclusively to the flue gas and to the combustion air fed to the combustion chamber.

2. Gas and steam turbine process according to claim 1, characterised thereby, that the combustion air is heated in an indirect heat exchange with the solid substance.

3. Gas and steam turbine process according to claim 1, characterised thereby, that the combustion air is heated in heat exchange with the solid substance and a heat carrier medium.

4. Gas and steam turbine process according to one of the claims 1 to 3, characterised thereby, that the combustion air is blown through the solid substance and conducted away together with the flue gas by way of the separator.

5. Gas and steam turbine process according to one of the claims 1 to 4, characterised thereby, that the ratio of the fuel supply into the pressure gasification to the fuel supply into the pressurised furnace is varied for the regulation of the power output of the gas turbine.

6. Gas and steam turbine process according to one of the claims 1 to 4, characterised thereby, that either the pressurised furnace or the pressure gasification is switched off in the case of partial load.

7. Gas and steam turbine process according to one of the claims 1 to 6, characterised thereby, that fuel gas from the pressure gasification is led into the pressurised furnace for reduction of the nitrous oxide formed there.

8. Gas and steam turbine process according to one of the claims 1 to 7, characterised thereby, that freshly mined brown coal, in a given case with additional water, is entered into the pressure gasification.

9. Gas and steam turbine process according to one of the claims 1 to 6, characterised thereby, that the fuel is dried by the exhaust gas of the gas turbine.

10. Gas and steam turbine process according to one of the claims 1 to 9, characterised thereby, that a sulphur-binding additive is entered into the pressurised furnace and the pressure gasification.

11. Gas and steam turbine process according to claim 10, characterised thereby, that the sulphur compounds formed in the pressure gasification are entered into the pressurised furnace and oxidised there.

12. Gas and steam turbine process according to one of the claims 1 to 11, characterised thereby, that for the combustion of solid fuels, the air number for the entire process in the flue gas downstream of the gas turbine is set to greater than 1.5.

13. Power station with the use of a combined gas and steam turbine process according to one of the claims 1 to 12, characterised thereby, that the pressurised furnace (1) contains a first flue duct (2), which receives a fluidised bed, a separator (4) for the separating of solid susbtance from the flue gas, and a second flue duct (3), which receives' the separated solid substance and is constructed as solid substance cooler, and that the solid substance layer is flowed through by a part of the current of the combustion air fed to the combustion chamber (24) and that heating surfaces (12), which stand in heat exchange with the combustion air, are arranged in the solid substance layer.

14. Power station according to claim 13, characterised by a exchanger (13), which is flowed through by a heat carrier medium and the heating surfaces of which are arranged on the one hand in the solid substance layer of the second flue duct (3) of the pressurised furnace (1) and on the other hand in an air duct (9) carrying the combustion air.

15. Power station according to claim 13, characterised thereby, that the pressurised furnace (1) and the pressure gasification (5) are built up of like elements.

## Revendications

1. Procédé combiné pour turbines à gaz/vapeur, dans lequel une turbine à gaz est mise en circuit en aval d'un système de récupération de chaleur à circuit eau-vapeur, et un foyer sous pression ainsi qu'une chambre de combustion sont montés en amont, des surfaces de chauffe destinées au chauffage de l'air sont disposées dans le foyer sous pression, des gaz de fumée provenant du foyer sous pression, de l'air de combustion préchauffé et des gaz de combustion provenant du foyer de gazéification sous pression sont amenés à la chambre de combustion, caractérisé en ce que les gaz de fumée produits dans le foyer sous pression sont épurés dans un séparateur de solides à action filtrante et en ce que les solides sont collectés dans un deuxième circuit du foyer sous pression, et en ce que l'air de combustion amené à la chambre de combustion est réchauffé au moyen d'un échange de chaleur avec les solides séparés, et en ce que la chaleur de combustion dégagée dans le foyer sous pression est transmise, jusqu'aux pertes de refroidissement d'origine technique, exclusivement aux gaz de fumée et à l'air de combustion amené à la chambre de combustion.

2. Procédé à turbines à gaz/vapeur selon la revendication 1, caractérisé en ce que l'air de combustion est chauffé avec les solides, selon un échange de chaleur indirect.

3. Procédé à turbines à gaz/vapeur selon la revendication 1, caractérisé en ce que l'air de combustion est chauffé par un échange de chaleur, à l'aide des solides et d'un fluide caloporteur.

4. Procédé à turbines à gaz/vapeur selon l'une des revendications 1 à 3, caractérisé en ce que l'air de combustion est soufflé au travers des solides et évacué par l'intermédiaire du séparateur, conjointement avec les gaz de fumée.

5. Procédé à turbines à gaz/vapeur selon l'une des revendications 1 à 4, caractérisé en ce que le rapport entre l'apport de combustible dans le foyer de gazéification sous pression et l'apport de combustible dans le foyer sous pression est modulé en vue d'assurer la régulation de puissance de la turbine à gaz.

6. Procédé à turbines à gaz/vapeur selon l'une des revendications 1 à 4, caractérisé en ce qu'en cas de charge partielle de la turbine à gaz, le foyer sous pression ou le foyer de gazéification sous pression est mis hors service.

7. Procédé à turbines à gaz/vapeur selon l'une des revendications 1 à 6, caractérisé en ce que les gaz de combustion provenant du foyer de gazéification sous pression sont amenés dans le foyer sous pression, en vue de la réduction de l'oxyde d'azote qui s'y est formé.

8. Procédé à turbines à gaz/vapeur selon l'une des revendications 1 à 7, caractérisé en ce que de la lignite est introduite, à son degré d'humidité d'extraction, conjointement avec un apport d'eau, dans le foyer de gazéification sous pression.

9. Procédé à turbines à gaz/vapeur selon l'une des revendications 1 à 6, caractérisé en ce que le combustible est séché au moyen des gaz d'échappement de la turbine à gaz.

10. Procédé à turbines à gaz/vapeur selon l'une des revendications 1 à 9, caractérisé en ce qu'un additif combinant le soufre est introduit dans le foyer sous pression et dans le foyer de gazéification sous pression.

11. Procédé à turbines à gaz/vapeur selon la revendication 10, caractérisé en ce que les combinaisons soufrées formées dans le foyer de gazéification sous pression sont introduites dans le foyer sous pression et y sont oxydées.

12. Procédé à turbines à gaz/vapeur selon l'une des revendications 1 à 11, caractérisé en ce que, lors de la combustion de combustibles solides, l'indice d'air du procédé global dans les gaz de fumée, en aval de la turbine à gaz, est réglé à une valeur supérieure à 1,5.

13. Centrale de production d'énergie utilisant un procédé combiné de turbines à gaz/vapeur selon les revendications 1 à 12, caractérisée en ce que le foyer sous pression (1) contient un premier circuit (2) recevant un lit fluidisé, un séparateur (4) destiné à opérer la séparation des solides à partir des gaz de fumée et un deuxième circuit (3) recevant les solides séparés, réalisé sous forme de refroidisseur de solides, et en ce que la couche de solides est parcourue par un flux partiel d'air de combustion amené à la chambre de combustion (24), et en ce que des surfaces de chauffe (12) placées en échange thermique avec l'air de combustion sont disposées dans la couche de solides.

14. Centrale de production d'énergie selon la revendication 13, caractérisée par un échangeur de chaleur (13), parcouru par un flux d'un fluide caloporteur et dont les surfaces de chauffe sont disposées, d'une part, dans la couche de solides du deuxième circuit (3) du foyer sous pression (1) et, d'autre part, dans une conduite d'air (9) guidant l'air de combustion.

15. Centrale de production d'énergie selon la revendication 13, caractérisée en ce que le foyer sous pression (1) et le foyer de gazéification sous pression (5) sont construits a partir d'éléments du même type.
